# EUROPEAN PATENT SPECIFICATION

(11) **EP 2 746 578 B1**
(45) Date of publication and mention of the grant of the patent: **30.11.2016**
(21) Application number: 12199070.9
(22) Date of filing: 21.12.2012
(51) Int. Cl.: F03D 13/20, E02D 27/42, E04H 12/08

(54) **Segmented tower bottom flange and method of assembly**
Segmentierter Turmbodenflansch und Montageverfahren dafür
Bride de fond de colonne segmentée et procédée de montage

(43) Date of publication of application: 25.06.2014
(73) Proprietor: Siemens Aktiengesellschaft, 80333 München (DE)
(72) Inventor: Koot, Jasper, 3454 AX De Meern (NL)

(56) References cited:
- WO-A1-2005/095792
- WO-A1-2011/107589
- WO-A2-2009/103475

## Description

### Field of invention

The present invention relates to a fixing system for fixing a wind turbine tower to a ground and a method for fixing a wind turbine tower to a ground.

### Art background

Wind turbine towers are fixed to concrete fundaments for providing a robust fixation of the wind turbine to the ground. A wind turbine tower shell is fixed to a fixing flange, wherein the fixing flange is fixed to the concrete foundation. The fixing flanges may comprise a T-flange shape or an L-shape.

The flanges are fixed to the wind turbine tower at the fabrication site. Hence, the fixing flange which is mounted to the wind turbine tower section is transported e.g. over roads or railways to the site of operation, where the wind turbine is to be installed. Hence, the T-flanges and in particular the outer circumference of the T-flanges define the maximum diameter of the wind turbine tower section so that the outer diameter of the fixing flange is the limiting factor for the dimension (diameter) of the tower sections.

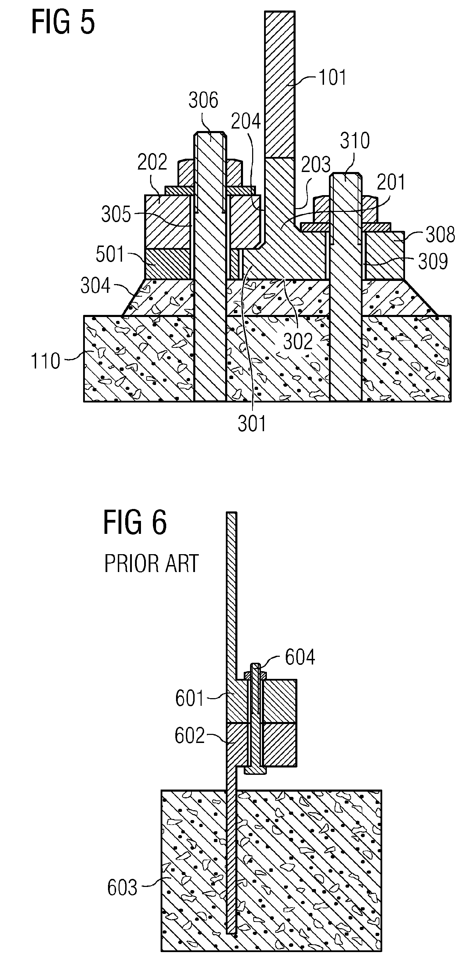

As shown in Fig. 6, it is known to use conventional L-shaped flanges 601 to which a wind turbine tower section is fixed. The conventional L-flange 601 is mounted by a conventional fixing element 604 to a further conventional L-flange 602. The further conventional L-flange 602 is fixed in the foundation during pouring of the concrete foundation 603. Thereby, a rigid and robust fixing system is achieved.

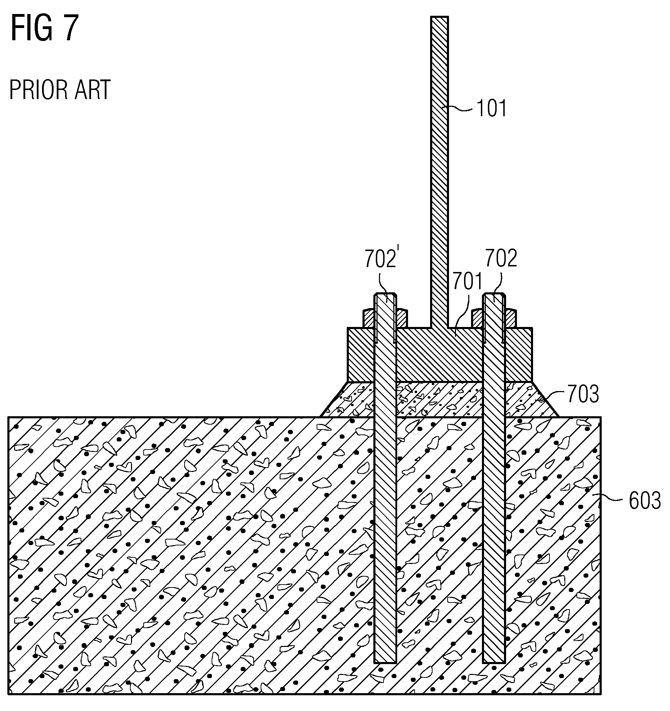

Fig. 7 shows a further conventional mounting system for a wind turbine tower shell to the concrete foundation 603. A wind turbine tower shell 101 is fixed to a conventional T-shaped flange 701 which comprises an inner circular section comprising a plurality of through-holes for mounting a plurality of conventional fixing elements 702 and an outer circular section comprising a plurality of further through-holes for mounting a plurality of further conventional fixing elements 702'. The conventional fixing elements 702,702' are threaded rods which are casted in the concrete foundation 603 via a special fixing structure. The T-flange is used because it reduces the stresses in the grouting/concrete foundation 603. This is in contrast to the L-flange, where prying forces create high local loads on the grouting/concrete foundation 603. Between the conventional T-flange 701 and the concrete foundation 603, a conventional grouting 703 may be interposed. The conventional fixing elements 702, 702' are spaced apart from each other, wherein the distance between the conventional fixing elements 702, 702' should be large enough in order to reduce the stresses of the concrete foundation 603.

Prior art examples can be found in WO2011107589 and WO2005095792

. Summary of the Invention

It may be an objective of the present invention to provide a proper fixing system for fixing a wind turbine tower to a ground.

This objective is solved by a fixing system for fixing a wind turbine tower to a ground, such as a concrete foundation, and by a method for fixing a wind turbine tower to a ground according to the independent claims.

According to a first aspect of the present invention, a fixing system for fixing a wind turbine tower to a ground is presented. The fixing system comprises a fixing flange to which the wind turbine tower (i.e. the wind turbine shell) is fixable. The fixing flange comprises a bottom surface with which the fixing flange is arrangeable on the ground. The fixing flange has a circular extension, i.e. along the circumference of the wind turbine tower shell, with a radially inner side and a radially outer side. The fixing flange comprises an edge protruding from the radially outer side and comprising a part of the bottom surface. The fixing system further comprises a ring segment which is fixable to the ground. The ring segment is formed in such a way that the ring segment is at least partially arrangeable on the ground and that the ring segment is at least partially engageable with the edge for holding (i.e. pressing) the fixing flange to the ground.

According to a further aspect of the present invention, a fixing method for fixing a wind turbine tower (shell) to a ground is presented. According to the method, the wind turbine tower is fixed to a fixing flange. A bottom surface of the fixing flange is arranged on the ground. The fixing flange has a circular extension with a radially inner side and a radially outer side, wherein the fixing flange comprises an edge protruding from the radially outer side and comprising a part of the bottom surface. A ring segment is fixed to the ground, wherein the ring segment is formed in such a way that the ring segment is at least partially arrangeable on the ground and that the ring segment is at least partially engageable with the edge for holding (i.e. pressing) the fixing flange to the ground.

The wind turbine tower and the wind turbine tower shell respectively comprise a tubular shape. Generally, the wind turbine tower shell comprises a circular ring shaped profile. In other exemplary embodiments, the wind turbine tower shell may also comprise a rectangular shape, for example.

At the bottom end of the wind turbine tower shell, the fixing flange (tower flange) is fixable. The wind turbine tower is fixed to the ground by the fixing flange. By the present invention, the fixing flange comprises a bottom surface with which the fixing flange is arrangeable on the ground. For example, the fixing flange may be mounted directly via the bottom surface to the ground or indirectly via a grouting layer or via another intermediate layer to the ground.

The ground may be a concrete foundation which is prepared for carrying the wind turbine.

The fixing flange has generally a circular extension with the radially inner side and the radially outer side. The circular extension complies specifically with the circumferential run of the shell the wind turbine tower. The wind turbine tower (shell) may be fixed to the fixing flange e.g. by welding or by a bolt connection. The wind turbine tower comprises a center axis which runs from the bottom of the wind turbine tower to the top end of the wind turbine tower. A wind turbine tower shell extends around the center axis, wherein the centre axis is the symmetry axis of the wind turbine tower. The inner wall surface respectively the radially inner side of the wind turbine tower shell and the fixing flange comprise a normal which directs to the center axis. In other words, the inner side is located closer to the center axis than the radially outer side of the wind turbine tower shell and the fixing flange, respectively.

The fixing flange comprises a part of the bottom surface with which the fixing flange contacts the ground. Furthermore, from the radially outer side the edge protrudes. The edge comprises a further part of the bottom surface. Furthermore, the edge comprises a top surface which is located at an opposite end with respect to the bottom surface of the edge. The ring segment may be abut onto the top surface of the edge and hold i.e. press thereby the fixing flange in the direction to the ground. Specifically, the edge is free of any fixing provisions of fixing structures, such as through-holes.

The ring segment is partially arrangeable and abuttable onto the ground or an intermediate layer, such as a grouting layer. The ring segment is in particular adapted for running along the radially outer side of the fixing flange. The ring segment may form a half ring segment, a quarter ring segment or any other smaller ring segment. A plurality of ring segments may be attached to one another along the circumferential run of the radially outer side of the fixing flange.

Specifically, the ring segment is adapted to be partially located on the ground and additionally adapted to abut onto the top surface of the edge. Hence, the ring segment is formed for at least partially enveloping (engaging) the edge between the ring segment itself and the ground. Hence, by pressing the ring segment to the ground, the ring segment, which partially abuts onto the top surface of the edge presses also the edge and hence the fixing flange to the ground. Thereby, the fixing flange and hence the wind turbine tower is pressed and fixed to the ground by the ring segment.

In conventional approaches, the fixing flanges are conventional L-flanges which direct to a radially inner side but which do not provide a large fixing diameter for fixing the fixing flange to the ground, for example. Alternatively, it is known to provide T-flanges which provide a large fixing diameter for fixing the fixing flange to the ground. The T-flanges provide two spaced through holes, one located further radially outwards with respect to the outer side of the wind turbine shell. Two spaced conventional fixing elements may be inserted into the two spaced through holes in order to provide a proper fixation to the ground. However, the T-flanges comprise large diameters which restrict the maximum diameter of the wind turbine tower due to transportation restrictions.

According to the approach of the present invention, the wind turbine tower may be already fixed to the fixing flange during transportation to the site of operation of the wind turbine. The maximum diameter is defined by the wind turbine shell diameter and the outer diameter of the edge. The edge comprise a little larger than the diameter of the turbine tower shell. However, the ring segments may be transported individually and separately so that they do not represent the maximum diameter of the transported parts. By the above described fixing system, it is allowed that the wind turbine tower diameter may be constructed larger in size compared to the conventional integral T-flange solution and the tower wall may be constructed thinner which leads to a lower mass and lower costs.

According to a further exemplary embodiment, the ring segment comprises at least one fixing structure which is formed for interacting with a fixing element for fixing the ring to the ground. The fixing structure is for example a through-hole and/or a threaded hole, wherein the fixing element may be for example a threaded rod. The threaded rod may be for example fixed with the fixing structure and additionally with the ground, such as a concrete foundation into which the threaded rod may be casted.

According to a further exemplary embodiment, the ring segment comprises a groove which comprises a complementary shape with respect to the edge such that the edge is engaged (partially enveloped) by the groove. The groove may comprise for example an L-shaped or a U-shaped profile, wherein a surface section of the groove is abuttable onto the top surface of the edge for pressing the fixing flange to the ground.

According to a further exemplary embodiment, the fixing system further comprises a grouting layer which is interposed between the bottom surface and the ground. The ring segment and the fixing flange are arrangeable to the grouting layer. The grouting layer may be made of a concrete material or a metal material, for example. The grouting layer may function as an adapted layer between the surface of the concrete foundation and the bottom surface of the ring segment and the fixing flange. The grouting ensures that there is full contact between flange and concrete. It fills all unevenness in the concrete or flange.

According to a further exemplary embodiment, the grouting layer comprises a further groove which has a complementary shape with respect to the edge, such that the edge is at least partially engaged (enveloped) by the further groove. Hence, according to the exemplary embodiment, the further groove comprises a complementary shape of the edge such that the edge fits into the further groove of the grouting layer. Specifically, the edge may be countersunk into the further groove, such that the top surface of the edge and a top surface of the grouting layer are planar such that the ring segment which may comprise a planar bottom surface is abuttable onto the top surface of the grouting layer and the top surface of the edge for pressing the edge to the ground. In other words, the edge may then be engaged (enveloped) by the ring segment and the grouting layer.

By the above-described exemplary embodiment, the grouting layer comprises the further groove, wherein the ring segment may comprise a plane bottom surface without any machined grooves. Hence, the ring segment is simpler to manufacture and hence the manufacturing costs may be reduced.

The grouting layer may consist of concrete or grout that is poured in the void between concrete foundation (i.e. the ground) and flange. Metal plates or nylon (plastic) nuts may be placed on the concrete foundation to act as a spacer, so that the grouting needs to have some space to flow in the liquid state. Then the tower is placed on top of this. The fixing flange e.g. together with the tower segments are bolted via the fixing elements (e.g. threaded rods and nuts) to the concrete foundation with limited force. Then the grouting layer is poured in the space between the fixing flange and the (concrete) foundation (i.e. the ground). When the grouting layer is cured (after a few days), the nuts are turned until the bolted connection between flange and foundation are tensioned to a required level.

According to a further exemplary embodiment, the edge has a chamfered section. The groove and/or the further groove have the complementary shape with respect to the chamfered edge. Hence, the edge fits together with its chamfered section into the (further) groove. Hence, a proper force transmission is achieved because no corners exist if the edge is engaged into (i.e. enveloped by) the groove and the further groove respectively. By the chamfered edged peak stresses in e.g. the grouting layer may be reduced.

According to to the invention, the fixing system comprises a spacer element which is interposed between the ring segment and the ground. Hence, the spacer element may have the same thickness as the edge, for example. Hence, the ring segment may be abutted onto the top surface of the edge and the top surface of the spacer element. The spacer element is interposed between the ground and the grouting layer, respectively and the ring segment. The edge may then be engaged or housed by the fixing flange, the spacer element and the ground and the grouting layer, respectively. Hence, by the described embodiments, standard parts for the ring segment may be used, because the thickness of different edges of different fixing flanges may be adapted by the spacer element. Furthermore, the grouting layer is easier to form because the grouting layer may comprise a constant thickness. In other words, the grouting layer may not need any further grooves into which the fixing flange with its edge has to be placed. Specifically, the advantage may be that the grouting layer has a constant thickness, which may be easier to grout (pour the grout inbetween the fixing flange/segment and the ground/foundation. Furthermore the load under the fixing flange/segment is spread more evenly (i.e. lower loads on the grouting layer/ground, foundation. Hence, the grouting layer can be produced cheaper.

According to a further exemplary embodiment, the fixing flange comprises a fixing section protruding from the radially inner side and comprising at least a part of the bottom surface. The fixing section comprises at least one further fixing structure, in particular a further through-hole which is formed for interacting with the further fixing element, in particular a further threaded bar, for fixing the fixing flange to the ground. If the fixing flange comprises a fixing section, the fixing flange forms in particular an L-shaped profile. If the fixing flange is fixed to the ground by the segmented ring segment which is removeably attached via the edge to the fixing flange, the fixing flange forms a T-shape.

According to a further exemplary embodiment, the fixing system comprises a deformable layer which is interposed between the ring segment and the ground. The deformable layer may be elastically or plastically deformable. By the deformable layer, an unevenness of the surface of the ground or the grouting layer may be clear and adjusted. Furthermore, the flexible layer ensures that the pressure is on the outside (radially) of the ring segments. Thereby the ring segment is freer to move, ensuring better contact between the ring segments and protruding edge on the fixing flange.

A flexible layer may be a neoprene layer or a form strip, for example.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a wind turbine according to an exemplary embodiment of the present invention;
Fig. 2 shows a cross-sectional view of a wind turbine tower cross-section according to an exemplary embodiment of the present invention;
Fig. 3 shows a schematical cross section view of a fixing system which does not form part of the present invention;
Fig. 4 shows a schematical cross section view of an example which does not form part of the present invention, wherein a grouting layer comprises a further groove;
Fig. 5 shows a schematical view of a fixing system comprising a spacer element according to an exemplary embodiment of the present invention; and
Fig. 6 and Fig. 7 show schematical cross section views of conventional fixing arrangements for wind turbine tower sections to the ground.

### Detailed Description

The illustrations in the drawings are schematic. It is noted that in different figures similar or identical elements are provided with the same reference signs.

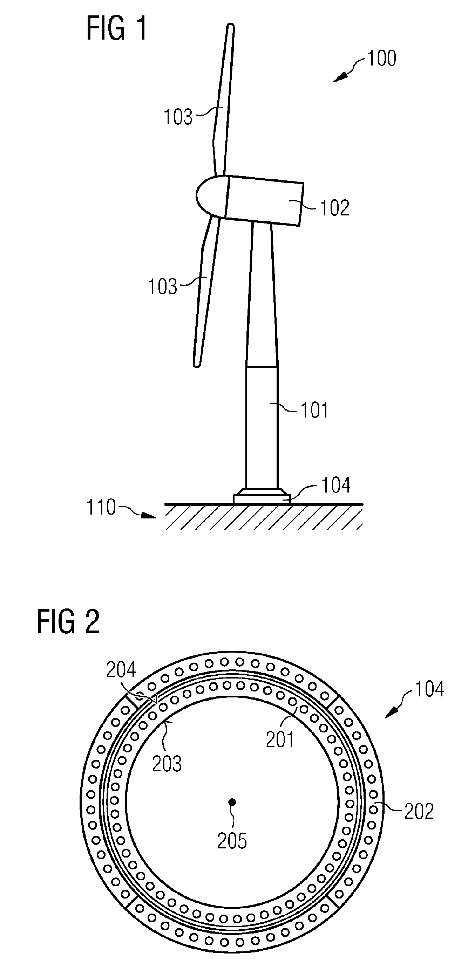

Fig. 1 shows a wind turbine 100 which comprises a wind turbine tower 101, i.e. a wind turbine tower shell 101, a nacelle 102 to which the blades 103 are mounted. The wind turbine 100 is mounted with the ground section 104 of the wind turbine tower 101 to a ground 110.

Fig. 2 shows a cross-section of the ground section 104 of the wind turbine tower 101. The wind turbine tower 101 comprises a tubular shape with a central axis 205. The wind turbine tower 101 runs along a circumferential direction around the central axis 205. At the ground section 104, the wind turbine 100 comprises a fixing flange 201 which runs along a circumferential direction around the center axis 205. The wind turbine tower 101 is fixed to the fixing flange 201 for example by welding. The fixing flange 201 comprises a radially inner side 203 and a radially outer side 204. Along the radially outer side 204, circumferentially extending ring segments 202 are attached which fixes the fixing flange 201 to the ground 110. As can be taken from Fig. 2, the ring segments 202 are quarter ring elements which are attached one after another along the circumferential direction and hence surround the complete radially outer side 204.

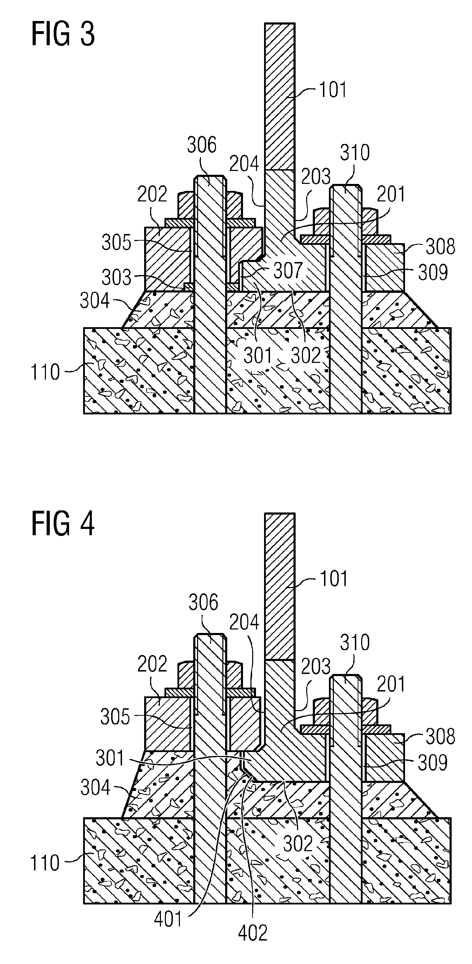

Fig. 3 shows a schematical view of a fixing system which does not form part of the present invention. The fixing system for fixing the wind turbine tower 101 to a ground 110 comprises the fixing flange 201 to which the wind turbine tower 101 is fixable. Furthermore, the ring segments 202 are shown which are fixable to the ground 110. The fixing flange 201 comprises a bottom surface 302 with which the fixing flange 201 is arrangeable on the ground 110. The fixing flange 201 has a circular extension with the radially inner side 203 and the radially outer side 204.

The fixing flange 201 comprises an edge 301 protruding from the radially outer side 204 and comprising a part of the bottom surface 302. The edge 301 runs and extends along the circumferential direction and along the radially outer side 204.

The ring segment 202 is formed in such a way that the ring segment 202 is at least partially arrangeable on the ground 110 and that the ring segment 202 is at least partially abuttable with the (top surface of the) edge 201 for pressing the fixing flange 201 to the ground 110.

The ring segment 202 and the fixing flange 201 may be attached directly to a ground 110, such as a concrete fundament, or may be attached on a grouting layer 304 which is interposed between the ground 110 and the ring segment 202 and the fixing flange 201.

As can be taken from Fig. 3, the edge 301 protrudes from the radially outer side 204. The edge 301 is free of any fixation structures, such as through-holes or the like. Hence, the edge 301 may be a small nose or lug, for example. The edge 301 may comprise a top surface onto which the ring segment 202 is abuttable and a part of the bottom surface 302 with which the edge is abuttable on the ground 110 and the grouting layer 304, respectively.

The ring segment 202 is abuttable onto the top surface of the edge 301 such that the ring segment 202 partially engages (i.e. partially envelopes) the edge 301 so that the ring segment 202 presses the edge 301 to the ground 110.

As can be taken in Fig. 3, the ring segment 202 may comprise a groove 307 which has a complementary shape with respect to the edge 301. Furthermore, the groove 307 is formed to compensate some radial variation of the edge 301 of the fixing flange 201 and the ring segments 202. Manufacturing always has some tolerances, and the groove 307 allows some variation/fabrication tolerances of the ring segments 202 and/or fixing flange 201.

Specifically, the edge 301 comprises a circumferential run around the center axis 205 so that the groove 307 comprises a similar circumferential run with respect to the edge 301. The ring segment 202 may be pressed and fixed by a fixing element 306, such as a threaded bar, to the ground 110. Therefore, the ring segment 202 comprises a fixing structure 305, such as a through-hole.

Between the ring segment 202 and the ground 110 and the grouting layer 304, respectively, a deformable layer 303 may be interposed in order to balance and clear unevenness of the surface of the grouting layer 304 and the ground 110, respectively. Furthermore, the deformable layer 303 is formed to compensate for some radial variation of the edge 301 of the fixing flange 201, the ring segments 202 and the ground 110. A further deformable layer may also interposed between the contacting surfaces of the edge 301 and the ring segments 202, so that unevenness of the contacting surfaces of the edge 301 and the ring segments 202 may be cleared. Manufacturing always has some tolerances and the deformable layer 303 allows some variation/fabrication tolerances of the ring segments 202, the fixing flange 201 and/or the ground 110.

Furthermore, as can be taken from Fig. 3, the fixing flange 201 may comprise a fixing section 308 which protrudes from the radially inner side 203 of the fixing flange 301. The fixing section 308 comprises further fixing structures 309, such as through-holes, through which further fixing elements 310 may be attached in order to fix the fixing flange 203 to the ground 110. Hence, in contrary to the edge 301, the fixing section 308 has a larger radial extension and is not free from any fixing structures 308, for example.

Fig. 4 shows a further example of the fixing structure not forming part of the present invention. Generally, the fixing system shown in Fig. 4 comprises similar features as the fixing system as shown in Fig. 3 except that the grouting layer 304 comprises a further groove 401 which comprises a complementary shape with respect to the edge 301. Specifically, the further groove 401 is formed in such a way that the edge 301 is engaged (i.e. enveloped) into the further groove 401 such that the top surface of the grouting layer 304 and the top surface of the edge 301 are planar (i.e. within a common plane). Specifically, the ring segments 202 are of a simpler cross section area, making it easier to fabricate.

On top of the top surface of the edge 301 and the top surface of the grouting layer 304 the ring segment 202 is abuttable. The ring segment 202 may therefore comprise a plane bottom surface.

Hence, it is not necessary to machine and adapt the ring segment 202 to the shape of the edge 301. In other words, forming a groove 301 into the bottom surface of the ring segment 202 may be obsolete. The edge 301 is engaged by the ring segment 202 and the grouting layer 304.

Furthermore, as can be taken from Fig. 4, the edge and the further groove 401 comprises a chamfered section 402. Hence, a proper force transmission and hence a reduction of peak stresses in the grouting layer 304 are reduced.

Fig. 5 shows a further exemplary embodiment of the fixing system, wherein the fixing system shown in Fig. 5 comprises similar features as the fixing systems shown in Fig. 3 and Fig. 4. Additionally, a spacer element 501 is attached between the bottom surface of the ring segment 202 and the top surface of the ground 110 and the grouting layer 304, respectively. Instead of forming a groove 307 to the ring segment 202 or a further groove 401 to the grouting layer 304, the spacer element 501 is used to provide an engagement of the edge 301 between the ring segment 302 and the ground 110. The spacer element 501 is interposed between the ring segment 302 and the grouting layer 304. The spacer element 501 comprises the same or similar width as the edge 301. The ring segment 302 may comprise a plane bottom surface and may thus abut onto the spacer element 501 and the top surface of the edge 301. By fixing the ring segment 202 to the ground 110 by the fixing element 306, the engaged edge 301 and hence the fixing section 201 is fixed to the ground 110.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Fixing system for fixing a wind turbine tower (101) to a ground (110), the fixing system comprising
a fixing flange (201) to which the wind turbine tower (101) is fixable,
wherein the fixing flange (201) comprises a bottom surface (302) with which the fixing flange (201) is arrangable on the ground (110),
wherein the fixing flange (201) has a circular extension with a radially inner side (203) and a radially outer side (204), wherein the fixing flange (201) comprises an edge (301) protruding from the radially outer side (204) and comprising a part of the bottom surface (302),
a ring segment (202) which is fixable to the ground (110),
wherein the ring segment (202) is formed in such a way that the ring segment (202) is at least partially arrangable on the ground (110) and that the ring segment (202) is at least partially engageable with the edge (301) for holding the fixing flange (201) to the ground (110), **characterized in that** a spacer element (501) which is interposed between the ring segment (202) and the ground (110), such that the ring segment (202) abuts onto a top surface of the spacer element (501) and a top surface of the edge (301).

2. Fixing system according to claim 1,
wherein the ring segment (202) comprises at least one fixing structure (305) which is formed for interacting with a fixing element (306) for fixing the ring segment (202) to the ground (110).

3. Fixing system according to claim 2,
wherein the at least one fixing structure (305) is a through hole through which the fixing element (306), in particular a threaded bar, is guidable.

4. Fixing system according to one of the claims 1 to 3,
wherein the ring segment (202) comprises a groove (307) which comprises a complementary shape with respect to the edge (301) such that the edge (301) is engageable by the groove (307).

5. Fixing system according to one of the claims 1 to 4, further comprising
a grouting layer (304) which is interposed between the bottom surface (302) and the ground (110),
wherein the ring segment (202) and the fixing flange (201) are arrangable to the grouting layer (304).

6. Fixing system according to claim 5,
wherein the grouting layer (304) comprises a further groove (401) which has a complementary shape with respect to the edge (301) such that the edge (301) is engageable by the further groove (401).

7. Fixing system according to claim 6,
wherein the edge (301) has a chamfered section (402).

8. Fixing system according to one of the claims 1 to 7,
wherein the fixing flange (201) comprises a fixing section (308) protruding from the radially inner side (203) and comprising at a part of the bottom surface (302),
wherein the fixing section (308) comprises at least one further fixing structure (309), in particular a further through hole, which is formed for interacting with a further fixing element (310), in particular a further threaded bar, for fixing the fixing flange (201) to the ground (110).

9. Fixing system according to one of the claims 1 to 8, further comprising,
a deformable layer (303) which is interposed between the ring segment (202) and the ground (110).

10. Method for fixing a wind turbine tower (101) to a ground (110) using a fixing system according to any of claims 1-9, the method comprising
fixing a wind turbine tower (101) to a fixing flange (201),
arranging a bottom surface (302) of the fixing flange (201) on the ground (110),
wherein the fixing flange (201) has a circular extension with a radially inner side (203) and a radially outer side (204), wherein the fixing flange (201) comprises an edge (301) protruding from the radially outer side (204) and comprising a part of the bottom surface (302),
fixing a ring segment (202) to the ground (110),
wherein the ring segment (202) is formed in such a way that the ring segment (202) is at least partially arrangable on the ground (110) and that the ring segment (202) is at least partially engageable with the edge (301) for holding the fixing flange (201) to the ground (110), **characterized in that** the method further comprises the step of
interposing a spacer element (501) between the ring segment (202) and the ground (110), such that the ring segment (202) abuts onto a top surface of the spacer element (501) and a top surface of the edge (301).

## Patentansprüche

1. Befestigungssystem zum Befestigen eines Windenergieanlagenturms (101) an einem Boden (110), wobei das Befestigungssystem umfasst:
einen Befestigungsflansch (201), an welchem der Windenergieanlagenturm (101) befestigbar ist,
wobei der Befestigungsflansch (201) eine Bodenfläche (302) umfasst, mit welcher der Befestigungsflansch (201) auf dem Boden (110) angeordnet werden kann,
wobei der Befestigungsflansch (201) eine kreisförmige Verlängerung mit einer radial inneren Seite (203) und einer radial äußeren Seite (204) aufweist,
wobei der Befestigungsflansch (201) einen Rand (301) umfasst, der von der radial äußeren Seite (204) vorsteht und einen Teil der Bodenfläche (302) umfasst,
ein Ringsegment (202), welches an dem Boden (110) befestigbar ist,
wobei das Ringsegment (202) auf eine solche Weise ausgebildet ist, dass das Ringsegment (202) wenigstens teilweise auf dem Boden (110) angeordnet werden kann, und dass das Ringsegment (202) wenigstens teilweise mit dem Rand (301) in Eingriff gebracht werden kann, um den Befestigungsflansch (201) am Boden (110) zu halten,
**gekennzeichnet durch**
ein Distanzelement (501), welches zwischen dem Ringsegment (202) und dem Boden (110) angeordnet ist, sodass das Ringsegment (202) an einer Oberseite des Distanzelements (501) und einer Oberseite des Randes (301) anliegt.

2. Befestigungssystem nach Anspruch 1,
wobei das Ringsegment (202) wenigstens eine Befestigungsstruktur (305) umfasst, welche zum Interagieren mit einem Befestigungselement (306) zum Befestigen des Ringsegments (202) am Boden (110) ausgebildet ist.

3. Befestigungssystem nach Anspruch 2,
wobei die wenigstens eine Befestigungsstruktur (305) ein Durchgangsloch ist, durch welches das Befestigungselement (306), insbesondere eine Gewindestange, geführt werden kann.

4. Befestigungssystem nach einem der Ansprüche 1 bis 3,
wobei das Ringsegment (202) eine Auskehlung (307) umfasst, welche eine bezüglich des Randes (301) komplementäre Form aufweist, sodass der Rand (301) mit der Auskehlung (307) in Eingriff gebracht werden kann.

5. Befestigungssystem nach einem der Ansprüche 1 bis 4, welches ferner umfasst:
eine Vergussschicht (304), welche zwischen der Bodenfläche (302) und dem Boden (110) angeordnet ist,
wobei das Ringsegment (202) und der Befestigungsflansch (201) an der Vergussschicht (304) angeordnet werden können.

6. Befestigungssystem nach Anspruch 5,
wobei die Vergussschicht (304) eine weitere Auskehlung (401) umfasst, welche eine bezüglich des Randes (301) komplementäre Form aufweist, sodass der Rand (301) mit der weiteren Auskehlung (401) in Eingriff gebracht werden kann.

7. Befestigungssystem nach Anspruch 6,
wobei der Rand (301) einen abgeschrägten Abschnitt (402) aufweist.

8. Befestigungssystem nach einem der Ansprüche 1 bis 7,
wobei der Befestigungsflansch (201) einen Befestigungsabschnitt (308) umfasst, der von der radial inneren Seite (203) vorsteht und einen Teil der Bodenfläche (302) umfasst,
wobei der Befestigungsabschnitt (308) wenigstens eine weitere Befestigungsstruktur (309) umfasst, insbesondere ein weiteres Durchgangsloch, welche zum Interagieren mit einem weiteren Befestigungselement (310), insbesondere einer weiteren Gewindestange, zum Befestigen des Befestigungsflansches (201) am Boden (110) ausgebildet ist.

9. Befestigungssystem nach einem der Ansprüche 1 bis 8, welches ferner umfasst:
eine verformbare Schicht (303), welche zwischen dem Ringsegment (202) und dem Boden (110) angeordnet ist.

10. Verfahren zum Befestigen eines Windenergieanlagenturms (101) an einem Boden (110) unter Verwendung eines Befestigungssystems nach einem der Ansprüche 1 bis 9,
wobei das Verfahren umfasst:
Befestigen eines Windenergieanlagenturms (101) an einem Befestigungsflansch (201),
Anordnen einer Bodenfläche (302) des Befestigungsflansches (201) auf dem Boden (110),
wobei der Befestigungsflansch (201) eine kreisförmige Verlängerung mit einer radial inneren Seite (203) und einer radial äußeren Seite (204) aufweist,
wobei der Befestigungsflansch (201) einen Rand (301) umfasst, der von der radial äußeren Seite (204) vorsteht und einen Teil der Bodenfläche (302) umfasst,
Befestigen eines Ringsegments (202) am Boden (110), wobei das Ringsegment (202) auf eine solche Weise ausgebildet ist, dass das Ringsegment (202) wenigstens teilweise auf dem Boden (110) angeordnet werden kann, und dass das Ringsegment (202) wenigstens teilweise mit dem Rand (301) in Eingriff gebracht werden kann, um den Befestigungsflansch (201) am Boden (110) zu halten,
**dadurch gekennzeichnet, dass** das Verfahren ferner den Schritt des Anordnens eines Distanzelements (501) zwischen dem Ringsegment (202) und dem Boden (110) umfasst, sodass das Ringsegment (202) an einer Oberseite des Distanzelements (501) und einer Oberseite des Randes (301) anliegt.

## Revendications

1. Système de fixation pour fixer une tour d'éolienne (101) sur un sol (110), le système de fixation comprenant :
une bride de fixation (201) à laquelle la tour d'éolienne (101) peut être fixée,
dans lequel la bride de fixation (201) comprend une surface inférieure (302) avec laquelle la bride de fixation (201) peut être agencée sur le sol (110),
dans lequel la bride de fixation (201) possède une extension circulaire avec un côté radialement intérieur (203) et un côté radialement extérieur (204),
dans lequel la bride de fixation (201) comprend un bord (301) faisant saillie à partir de la partie radialement extérieure (204) et comprenant une partie de la surface inférieure (302),
un segment annulaire (202) qui peut être fixé au sol (110), dans lequel le segment annulaire (202) est formé de telle manière que le segment annulaire (202) peut être agencé au moins en partie sur le sol (110), et que le segment annulaire (202) peut être mis en prise au moins en partie avec le bord (301) pour maintenir la bride de fixation (201) sur le sol (110),
**caractérisé en ce que**
un élément d'espacement (501) est interposé entre le segment annulaire (202) et le sol (110), de telle sorte que le segment annulaire (202) vient en butée sur une surface supérieure de l'élément d'espacement (501) et une surface supérieure du bord (301).

2. Système de fixation selon la revendication 1,
dans lequel le segment annulaire (202) comprend au moins une structure de fixation (305) qui est formée pour coopérer avec un élément de fixation (306) pour fixer le segment annulaire (202) au sol (110).

3. Système de fixation selon la revendication 2,
dans lequel ladite au moins une structure de fixation (305) est un trou traversant à travers lequel l'élément de fixation (306), en particulier une tige filetée, peut être guidé.

4. Système de fixation selon l'une des revendications 1 à 3,
dans lequel le segment annulaire (202) comprend une rainure (307) qui comprend une forme complémentaire par rapport au bord (301) de telle sorte que le bord (301) peut être mis en prise par la rainure (307).

5. Système de fixation selon l'une des revendications 1 à 4, comprenant en outre :
une couche de scellement (304) qui est interposée entre la surface inférieure (302) et le sol (110),
dans lequel le segment annulaire (202) et la bride de fixation (201) peuvent être agencés sur la couche de scellement (304).

6. Système de fixation selon la revendication 5,
dans lequel la couche de scellement (304) comprend une rainure supplémentaire (401) qui a une forme complémentaire par rapport au bord (301) de telle sorte que le bord (301) peut être mis en prise par la rainure supplémentaire (401).

7. Système de fixation selon la revendication 6,
dans lequel le bord (301) présente une section chanfreinée (402).

8. Système de fixation selon l'une des revendications 1 à 7,
dans lequel la bride de fixation (201) comprend une section de fixation (308) faisant saillie à partir du côté radialement intérieur (203) et comprenant une partie de la surface inférieure (302),
dans lequel la section de fixation (308) comprend au moins une autre structure de fixation (309), en particulier un autre trou traversant qui est formé pour interagir avec un autre élément de fixation (310), en particulier une autre barre filetée, pour fixer la bride de fixation (201) au sol (110).

9. Système de fixation selon l'une des revendications 1 à 8, comprenant, en outre :
une couche déformable (303) qui est interposée entre le segment annulaire (202) et le sol (110).

10. Procédé de fixation d'une tour d'éolienne (101) sur un sol (110) à l'aide d'un système de fixation selon l'une quelconque des revendications 1 à 9, le procédé comprenant les étapes consistant à :
fixer une tour d'éolienne (101) à une bride de fixation (201),
agencer une surface inférieure (302) de la bride de fixation (201) sur le sol (110),
dans lequel la bride de fixation (201) possède une extension circulaire avec un côté radialement intérieur (203) et un côté radialement extérieur (204),
dans lequel la bride de fixation (201) comprend un bord (301) faisant saillie à partir du côté radialement extérieur (204) et comprenant une partie de la surface inférieure (302),
fixer un segment annulaire (202) au sol (110),
dans lequel le segment annulaire (202) est formé de telle manière que le segment annulaire (202) peut être agencé au moins en partie sur le sol (110), et que le segment annulaire (202) peut être mis en prise au moins en partie avec le bord (301) pour maintenir la bride de fixation (201) sur le sol (110),
**caractérisé en ce que** le procédé comprend en outre l'étape consistant à
interposer un élément d'espacement (501) entre le segment annulaire (202) et le sol (110), de telle sorte que le segment annulaire (202) vient en butée sur une surface supérieure de l'élément d'espacement (501) et une surface supérieure du bord (301).
